Europäisches Patentamt

(19) European Patent Office

Office européen des brevets

(11) Veröffentlichungsnummer: **0 1 1 3 735 B1**

(12) **EUROPÄISCHE PATENTSCHRIFT**

(45) Veröffentlichungstag der Patentschrift:
29.10.86

(51) Int. Cl.⁴: **H 02 P 7/62**

(21) Anmeldenummer: 83902098.9

(22) Anmeldetag: **11.07.83**

(86) Internationale Anmeldenummer:
**PCT/EP 83/00182**

(87) Internationale Veröffentlichungsnummer:
**WO 84/00451 (02.02.84 Gazette 84/3)**

(54) VERFAHREN UND VORRICHTUNG ZUM STEUERN DER DREHZAHL EINES ASYNCHRONMOTORS ZUM ANTRIEB EINER PUMPE.

(30) Priorität: **13.07.82 DE 3226150**
**21.03.83 DE 3310206**

(73) Patentinhaber: **Arid Electronic AG, Bellerivestrasse 55, CH-8008 Zürich (CH)**

(43) Veröffentlichungstag der Anmeldung:
**25.07.84 Patentblatt 84/30**

(72) Erfinder: **DÜRR, Walter, In der Eisenbach 32, D-6270 Idstein (DE)**
Erfinder: **WEISSE, Dietrich, Vierlingstrasse 27, D-6923 Waibstadt 2 (DE)**
Erfinder: **SIMON, Ulrich, Ernst-Ludwig-Allee 24, D-6072 Dreieich-Buchschlag (DE)**

(45) Bekanntmachung des Hinweises auf die Patenterteilung:
**29.10.86 Patentblatt 86/44**

(74) Vertreter: **Stoffregen, Hans-Herbert, Dr. Dipl.-Phys. et al, Patentanwälte Strasse & Stoffregen Salzstrasse 11a Postfach 2144, D-6450 Hanau/Main 1 (DE)**

(84) Benannte Vertragsstaaten:
**AT BE CH DE FR GB LI LU NL SE**

(56) Entgegenhaltungen:
DE - A - 1 911 047
FR - A - 2 170 138
FR - A - 2 204 074
US - A - 3 582 737
US - A - 3 652 924

## Beschreibung

Die Erfindung bezieht sich auf ein Verfahren und eine Vorrichtung zur Steuerung der Drehzahl eines Asynchronmotors zum Antrieb einer Pumpe, insbesondere eines als Spaltrohrläufer oder Käfigläufer ausgebildeten Asynchronmotors, wobei mittels einer vom Leistungsbedarf und/oder von der gewünschten Drehzahl abhängigen Bezugsgrösse in einer Ansteuerschaltung Signale erzeugt werden, die Halbleiterelemente steuern, die in mindestens zwei der die Motorwicklung speisenden Leitungszüge angeordnet sind.

Solche Vorrichtungen und Verfahren sind beispielsweise aus der FR-A 2 204 074 und der älteren deutschen Patentanmeldung P 3 046 406.3 bekannt. Die beiden Vorrichtungen arbeiten mit einer Phasenanschnittsteuerung von Triacs, die in die Zuleitungen der Motorwicklungen eingeschaltet sind.

Es hat sich gezeigt, dass derartige Steuerschaltungen für bestimmte Anwendungen von Pumpen, z.B. in Heizungskreisläufen, einen Nachteil besitzen, der hauptsächlich darin besteht, dass die Pumpen zu laut werden und sich das Pumpengeräusch auf die angeschlossene Rohrleitung überträgt.

Es ist auch eine Schaltungsanordnung mit einem Elektromotor bekannt, der eine Hauptwicklung enthält, die in Reihe mit einem Triac angeordnet ist. Die Drehzahl des Elektromotors wird durch eine Veränderung der Amplitude der Grundwelle der Spannung an der Hauptwicklung beeinflusst. Mittels des Triacs wird die an der Hauptwicklung anliegende Spannung so geformt, dass zwei Impulsfolgen entstehen, von denen jede eine Wiederholfrequenz hat, die der doppelten Frequenz der an der Hauptwicklung und dem Triac anstehenden Netzfrequenz entspricht. Die Phasenverschiebung zwischen den beiden Impulsfolgen ist auf eine ungeradzahlige Anzahl von Halbperioden einer Harmonischen eingestellt, die im Netz unterdrückt werden soll. Mit dieser Schaltungsanordnung kann trotz Verwendung einer Phasenanschnittsteuerung für die Drehzahlregelung eine geringe Verzerrung durch Oberwellen erreicht werden (FR-A 2 170 138).

Schliesslich ist eine Schaltungsanordnung zur Drehzahlsteuerung eines dreiphasigen Elektromotors bekannt, dessen Wicklungen im Stern über eine Dreieckschaltung von steuerbaren Halbleitergleichrichtern miteinander verbunden sind. Die Halbleitergleichrichter werden in Phasenanschnittsteuerung betrieben. Zur Ansteuerung der Halbleitergleichrichter werden einstellbare Zeitverzögerungsglieder verwendet, die je nach einer voreingestellten Zeit einen Zündimpuls an die Halbleitergleichrichter abgeben (US-A 3 582 737).

Der Erfindung liegt die Aufgabe zugrunde, auf die Phasenanschnittsteuerung eines Asynchronmotors zum Antrieb einer Pumpe so einzuwirken, dass das Pumpengeräusch und die auftretende Verlustwärme im Vergleich mit einer Betriebsweise, bei der die gleiche Leistung und Drehzahl durch symmetrischen Phasenanschnitt bei allen drei Phasen aufgebracht wird, verringert werden.

Die Aufgabe wird erfindungsgemäss dadurch gelöst, dass die Spannungs-Zeitflächen an mindestens zwei Motorwicklungen für unterschiedliche Phasen durch den Betrieb der Halbleiterelemente in Phasenanschnittsteuerung derart ungleich eingestellt werden, dass bei gleicher Leistung und Drehzahl, verglichen mit einer Betriebsweise symmetrischen Phasenanschnitts bei allen drei Phasen, sich Pumpengeräusch und Verlustwärme verringern.

Es ist demzufolge eine Asymmetrie der Phasenanschnitte gegeben. Unter Asymmetrie des Phasenanschnitts wird dabei der unterschiedliche Zünd- und Abschaltzeitpunkt der Halbleiterelemente vorzugsweise in Form von Triacs in Abhängigkeit vom Phasenwinkel bei allen drei Phasen verstanden, d.h., die Spannungszeitflächen (Leistungsminderung pro Phase) sind bei allen drei Phasen unterschiedlich gross. Zum Beispiel wird der Triac der ersten Phase bei Nulldurchgang gezündet, der Triac der zweiten Phase wird 5 ms nach Nulldurchgang und der Triac der dritten Phase 11 ms nach Nulldurchgang gezündet. Wann und bei welcher Asymmetrie eine optimale Geräuschdämpfung eintritt, hängt dabei von der jeweiligen Motorenbauart ab.

Weiterhin kann in der Ansteuerschaltung ein erstes Ausgangssignal erzeugt werden, welches bei einer gewünschten Drehzahländerung, bis die Drehzahl erreicht ist, in jede Stromzuführung zum Asynchronmotor eine Drossel derart einschaltet bzw. ausschaltet, dass bei gleicher Leistung und Drehzahl, verglichen mit einer Betriebsweise symmetrischen Phasenanschnitts bei allen drei Phasen, sich Pumpengeräusch und Verlustwärme vermindern. Mit den Drosseln soll eine zusätzliche Geräuschminderung zum asymmetrischen Phasenanschnitt erreicht werden, was sich aus folgendem Regelmechanismus ergibt. Die Drehzahl wird mit Hilfe des asymmetrischen Phasenanschnitts auf einen bestimmten Wert abgesenkt. Danach wird eine Spannungsdrossel automatisch über zum Beispiel einen Mikroprozessor in Reihe zur Motorwicklung eingeschaltet. Im gleichen Moment wird jedoch der Phasenanschnitt, der genau dem Spannungsabfall der Drossel entspricht, ausgeschaltet. Soll die Drehzahl weiter abgesenkt werden, wird erneut zur Drossel ein Phasenanschnitt zugeschaltet. Dieser Regelmechanismus kann sich je nach Grösse des Motors mehrmals wiederholen, so dass am Ende drei oder vier Drosseln hintereinander mit der Motorwicklung geschaltet sind. Der Zweck dieses Schaltaufbaues besteht darin, die relativ hohen Wirbelstromverluste im Rotor zu verringern. Durch diese Schaltungsanordnung ergibt sich in der Wirkung eine Kombination wie zwischen Stelltransformator und Phasenanschnitt. Die Drosseln werden dabei so bemessen, dass in der Phase der grössten Geräuschentwicklung und Erwärmung des Rotors der Spannungsabfall im Ständer nur durch die Drossel oder durch die Drosseln erzeugt wird und nicht durch den Phasenanschnitt.

Eine Vorrichtung zur Durchführung des oben beschriebenen Verfahrens besteht erfindungsgemäss darin, dass die Ansteuerschaltung für mindestens zwei der Halbleiterelemente Schaltkreise mit Zeitgliedern enthält, die derart ungleich eingestellt sind, dass bei gleicher Leistung und Drehzahl, verglichen mit einer Betriebsweise symmetrischen Phasenanschnitts bei allen drei Phasen, sich Pumpengeräusche und Verlustwärme verringern. Diese Zeitglieder können fest eingestellt und/oder einstellbar sein.

Bei Verwendung der vorstehend genannten Massnahmen entsteht ein asymmetrischer Phasenausschnitt in den Speisespannungen der Motorwicklungen. Zum Abgriff der Pumpenleistung sind unterschiedliche Möglichkeiten bekannt geworden. So kann zum Beispiel die Stromaufnahme jeder der drei Wicklungen oder nur einer der drei Wicklungen als Steuergrösse verwendet werden. Es ist auch möglich, den Druck in der Pumpenleitung als Steuergrösse abzugreifen.

Eine Ausgestaltung der Erfindung sieht vor, parallel zur Pumpe einen Differenz-Druckmesser an die Rohrleitung anzuschliessen und die Steuergrösse von dem einstellbaren Grenzwert des Differenzdruckes abzuleiten.

Es hat sich gezeigt, dass nicht unbedingt alle drei Zuleitungen zu den Motorwicklungen gesteuert werden müssen. Nach einem Ausführungsbeispiel der Erfindung sind demnach nur zwei Phasen angesteuert.

Diese erfindungsgemäss vorgeschlagenen Massnahmen bewirken einen ausserordentlich leisen Lauf der so geregelten bzw. gesteuerten Motoren.

Weitere Einzelheiten, Vorteile und Merkmale, auf die besonders hingewiesen wird, ergeben sich sowohl aus den Ansprüchen als auch aus der nachstehenden Beschreibung.

Die Erfindung ist im folgenden anhand der Zeichnungen beispielsweise näher erläutert, und zwar zeigt:

Fig. 1 eine Schaltungsanordnung nach einem älteren Vorschlag,

Fig. 2 ein Blockdiagramm für einen in Sternschaltung betriebenen Drehstrommotor, wobei in allen drei Phasen ein gesteuertes Halbleiterelement angeordnet ist,

Fig. 3 ein Blockdiagramm entsprechend Fig. 2, wobei nur in zwei Phasen gesteuerte Halbleiterelemente angeordnet sind,

Fig. 4 ein Blockdiagramm entsprechend Fig. 2, für einen in Dreieckschaltung betriebenen Pumpenmotor,

Fig. 5 ein Blockdiagramm entsprechend Fig. 3 für einen in Dreieckschaltung betriebenen Pumpenmotor,

Fig. 6 ein Blockdiagramm der Steuerschaltung,

Fig. 7 einen Impulsplan,

Fig. 8 eine schematische Darstellung der zeitlichen Lage der Steuerimpulse für ein Ausführungsbeispiel nach Fig. 2 oder 4,

Fig. 9 eine der Fig. 8 entsprechende Darstellung für ein Ausführungsbeispiel nach der Fig. 3 oder Fig. 5 und nach

Fig. 10 eine Schaltungseinzelheit der Gate- und Koppelschaltung,

Fig. 11 ein Blockschaltbild einer anderen Ausführungsform einer Anordnung zur Steuerung der Drehzahl eines Asynchronmotors,

Fig. 12 Einzelheiten der in Fig. 11 dargestellten Anordnung,

Fig. 13 ein Diagramm des Phasenverlaufs mit asymmetrischem Phasenanschnitt in zwei Phasen,

Fig. 14 ein weiteres Diagramm des Phasenverlaufs bei Einschaltung von Drosseln gemäss der in Fig. 12 und 13 dargestellten Anordnung,

Fig. 15 ein Diagramm des Verlaufs einer einzelnen Phase bei einem Steuervorgang in Abhängigkeit vom Spannungspegel am Drehzahlsteller.

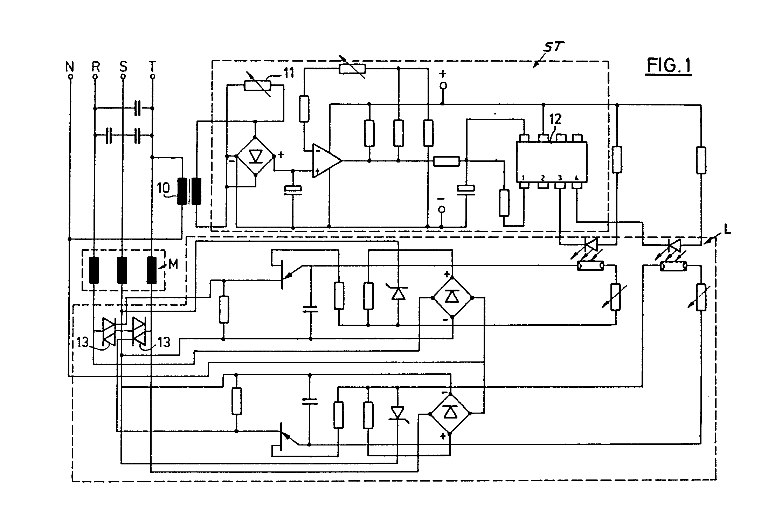

Fig. 1 zeigt eine Schaltungsanordnung der eingangs genannten Art nach der deutschen Patentanmeldung P 3 210 082. Hier wird ein die Leistungsaufnahme des Motors darstellendes Signal von einer als Trafo ausgebildeten Drossel 10 von einer der Phasenleitungen (T) abgegriffen und einem Strommesskreis zugeführt, der Bestandteil der Steuerschaltung ST ist. Die Steuerschaltung enthält als Signalgeber einen IC 12, dessen Ausgangssignale galvanisch getrennt über Optokoppler an den Leistungsteil L übertragen werden. Der Ausgang des Leistungsteils L wird in dem dargestellten Ausführungsbeispiel von zwei zwischen die Phasenleitungen des Motors M gelegten Triacs 13 gebildet.

Es ist ersichtlich, dass der durch die Triacs veränderte Motorstrom als Rückführgrösse in den Strommesskreis eingeht, so dass eine vollständige Regelschleife entsteht, die mittels Potentiometern eingestellt werden kann. Nach diesem älteren Beispiel erfolgt eine Phasenanschnittsteuerung in Abhängigkeit von der Leistungsaufnahme oder einer zweiten Regelgrösse, zum Beispiel der Temperatur eines Heizungskreislaufes.

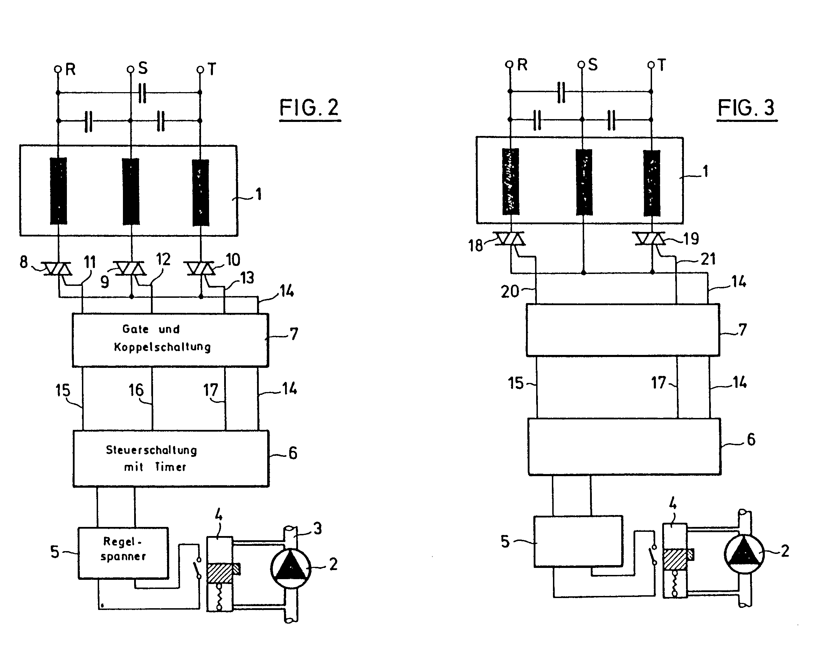

In den Fig. 2–4 ist ein mit Drehstrom gespeister Motor 1 einer Pumpe 2 durch seine Wicklungen angedeutet, die mit den Phasenzuleitungen R, S, T verbunden sind.

Als Pumpenmotoren werden wegen ihrer Robustheit und ihres einfachen Aufbaues bevorzugt Kurzschlussläufer, insbesondere Spaltrohrläufer oder auch Käfigläufer, verwendet. Dabei sind solche Motoren oftmals auch mit Hilfswicklungen versehen, die dazu dienen, eine Pumpe in mehr als einer Leistungsstufe arbeiten zu lassen. Der bei diesen Motoren vorhandene Schlupf wird in Kauf genommen.

Es ist nun bekannt, in die Netzzuleitungen der Motorwicklungen gesteuerte Halbleiterelemente, zum Beispiel die Triacs einzuschalten, wenn die Wicklungen in Dreieckschaltung angeordnet sind, bzw. solche gesteuerten Halbleiterelemente zwischen die Wicklungen und den Sternpunkt bei Sternschaltung einzusetzen. Die Steuerung dieser Halbleiterelemente erfolgt durch eine Bezugsgrösse, und zwar vorzugsweise die Leistungsaufnahme der Motorwicklungen. Hierzu sind unterschiedliche Schaltungsanordnungen bekannt geworden.

Mittels der in die Leitungen eingeschalteten gesteuerten Halbleiterelemente wird nun jeweils ein von der Bezugsgrösse abhängiger Bereich der als Sinuskurve dargestellten Spannung jeder Phase abgeschnitten, d.h. die Motoren werden mit sogenannter Phasen-Anschnitt-Steuerung betrieben. Tatsächlich handelt es sich jedoch hierbei um eine echte Regelung, da die Pumpendrehzahl ja dem jeweiligen Leistungsbedarf angepasst wird. Im folgenden ist jedoch der auf diesem Gebiet übliche Begriff «Steuerung» verwendet.

Eine erfindungsgemässe Drehzahlsteuerung kann mittels beliebig abgeleiteter Bezugsgrössen, die etwas über den Leistungsbedarf der Pumpe aussagen, betrieben werden. Bei den in Fig. 2–5 dargestellten Ausführungsbeispielen ist ein sehr einfaches Instrument der Ableitung einer Bezugsgrösse verwendet. Hierbei ist parallel zu der Pumpe in die Pumpenleitung 3 ein Druck-Differenzmesser 4 geschaltet, dessen Abgriff über einen Reed-Kontakt ein Signal an einen digitalen oder analogen Signalgenerator 5 abgibt. Die Grenzwerte des Druck-Differenzmessers sind einstellbar.

Nach der Erfindung wird das Ausgangssignal des eine Steuerspannung erzeugenden Schaltkreises 5 an eine Steuerschaltung 6 geleitet, die Zeitglieder und Impulsformer enthält und die weiter unten näher erläutert ist.

Eine Steuerschaltung 6 ist an eine Gate- und Koppelschaltung 7 angeschlossen, die die Triacs 8, 9 und 10 über Steuerleitungen 11, 12 und 13 ansteuert. Ein Ausführungsbeispiel dieser Gate- und Koppelschaltung 7 ist weiter unten näher erläutert. Eine Sternpunkt-Anschlussleitung 14 ist an die Gate- und Koppelschaltung und an die Steuerschaltung gelegt. Die Ausgangsleitungen der Steuerschaltungen sind mit 15, 16 und 17 bezeichnet, von denen jede einem der gesteuerten Halbleiterelemente 8–10 zugeordnet ist.

In dem Ausführungsbeispiel nach Fig. 2 ist jeder der drei Motorwicklungen ein solches gesteuertes Halbleiterelement zugeordnet.

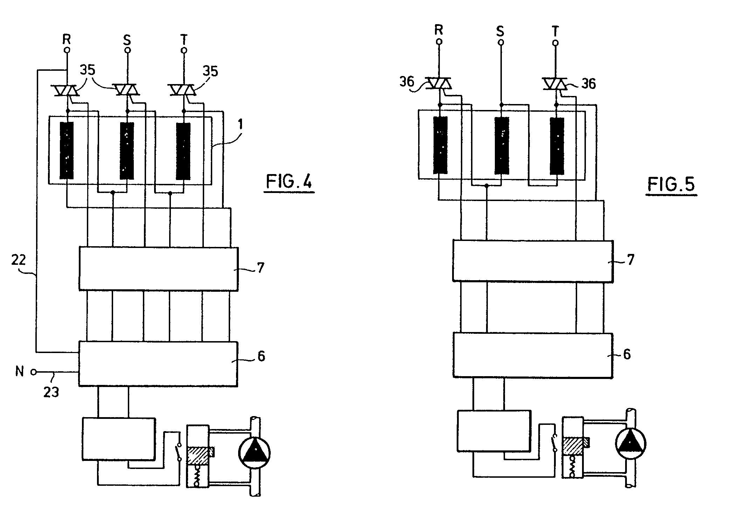

Das Ausführungsbeispiel nach Fig. 3 entspricht prinzipiell dem nach Fig. 2. Hierbei sind jedoch nur zwei Motorwicklungen solche gesteuerten Halbleiterelemente 18 und 19 zugeordnet, während die dritte Wicklung ungesteuert an den Sternpunkt gelegt ist. Die Steuerleitungen zu den gesteuerten Halbleiterelementen sind mit 20 und 21 bezeichnet.

Die Ausführungsbeispiele nach den Fig. 4 und 5 zeigen die Anwendung der Erfindung auf eine Dreieckschaltung der Motorwicklungen. Hierbei ist in dem Ausführungsbeispiel nach Fig. 4 in jede der Phasenleitungen R, S, T ein gesteuertes Halbleiterelement 35 gelegt.

Die Steuerschaltung 6 ist über eine Koppelleitung 22 mit der einen Phase R verbunden. Ferner ist die Steuerschaltung über eine Leitung 23 mit den N-Anschluss verbunden. Bei dem Ausführungsbeispiel nach Fig. 5 sind nur in zwei der Netzzuleitungen zu den Motorwicklungen, nämlich in die Leitungen R und T, gesteuerte Halbleiterelemente 36 eingeschaltet, während die dritte Phase S direkt an die Wicklung gelegt ist.

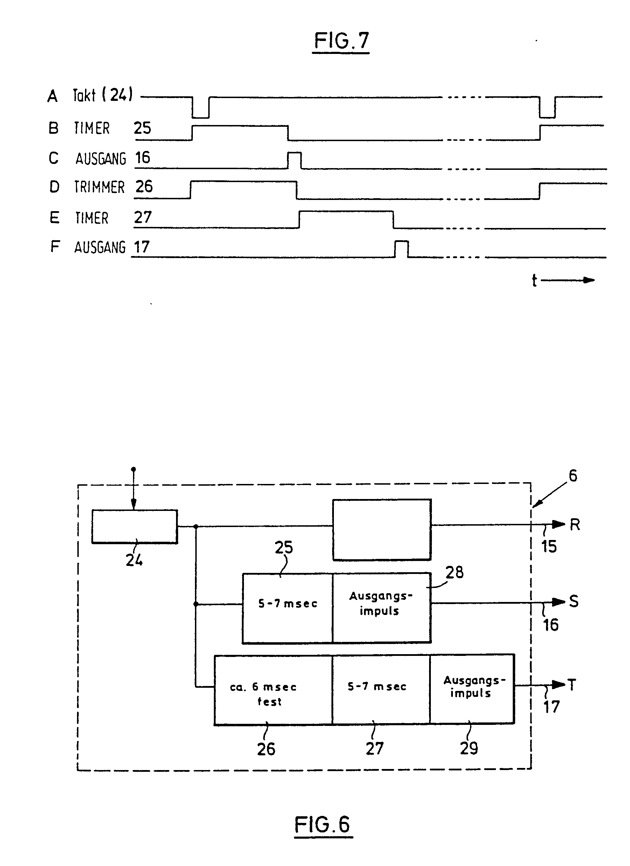

Fig. 6 zeigt rein schematisch in Form eines Blockschaltbildes den Aufbau einer Steuerschaltung 6 für das Ausführungsbeispiel nach Fig. 2. Der Ausgang des Steuerspannungsgenerators 5 ist an einen Impulsgenerator 24 gelegt, dessen Ausgang in der nachstehend beschriebenen Weise an die Ausgangsleitungen 15, 16 und 17 der Steuerschaltung gelegt ist.

Ein Ausgang des Generators 24 ist über einen nicht näher bezeichneten Impulsformer an die Ausgangsleitung 15 gelegt, die der Phase R zugeordnet ist. Ein zweiter Ausgang ist an ein Zeitglied 25 gelegt, das auf eine Impulsverzögerung von 5–7 Millisekunden einstellbar ist.

Diesem ist ein Impulsformer 28 nachgeschaltet, dessen Ausgang an der Leitung 16 anliegt. Ein weiterer Ausgang des Impulsgenerators 24 ist an ein fest eingestelltes Zeitglied 26 gelegt, welches beispielsweise auf eine Zeitverzögerung von 6 Millisekunden eingestellt ist. Diesem Zeitglied ist ein weiteres Zeitglied 27 nachgeschaltet, welches in dem Ausführungsbeispiel auf eine Zeitverzögerung von 5–7 Millisekunden einstellbar ist, so dass in dieser Phase eine gesamte Zeitverzögerung von 11–13 m sec. entsteht. Diesem Zeitglied 27 ist dann ein Impulsformer 29 nachgeschaltet, dessen Ausgang an die Leitung 17 gelegt ist, die der Phase T zugeordnet ist.

Die Wirkungsweise ergibt sich aus dem Impulsdiagramm nach der Fig. 7. Die Kurvenzüge A–F entsprechen dabei den Ausgängen der mit den gleichen Bezugszeichen versehenen Elemente der Fig. 6.

Aus dieser Darstellung ist ersichtlich, dass die Steuerimpulse der Kurven C und F auf den Leitungen 16 und 17 in einer einstellbaren Zeitverzögerung gegenüber dem Steuerimpuls auf der Leitung 15 auf die Leitungen 16 und 17 gegeben werden.

Die Zeitverzögerung ergibt sich aus dem jeweils gemessenen Phasenwinkel der Phasen S und T relativ zur Phase R und den Kenngrössen des jeweiligen Motors.

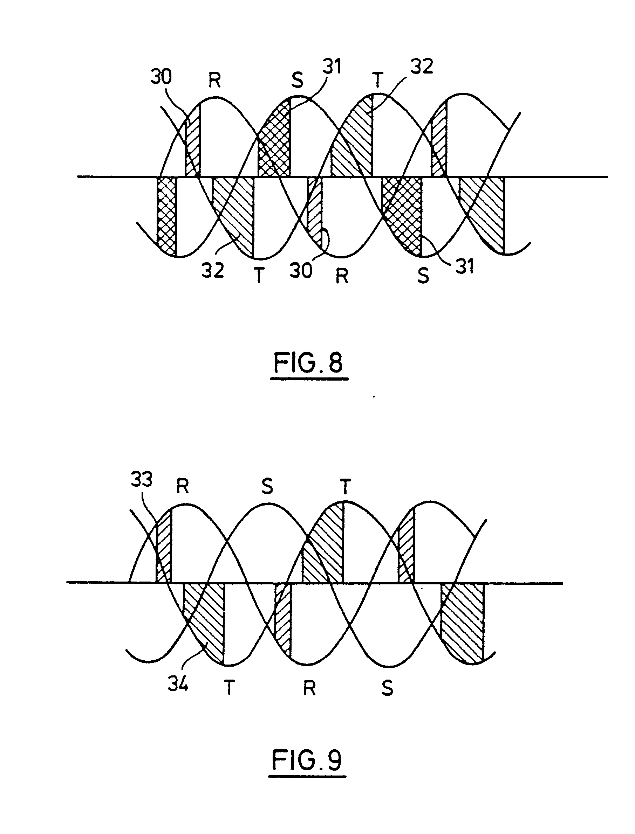

Es hat sich nun gezeigt, dass die Bearbeitung dieser Steuerimpulse in der Gate- und Koppelschaltung 7 ein bestimmtes Verhalten der Triacs 8–10 ergibt. Nach dem Zündpunkt des ersten Triacs ergibt sich ein Spannungsabfall, bis der zweite Triac zündet. Damit geht die Spannung am vorangehenden Triac wieder auf Null usw., so dass die Triacs nur ein bestimmtes Zeitintervall aus der jeweiligen Phase herausschneiden. Dies ist in den nachfolgenden Fig. 8 und 9 schematisch angedeutet, die einen Ausschnitt aus einem Oszillographenbild darstellen. Dabei ist die Darstellung der Fig. 8 im Ausführungsbeispiel nach Fig. 2 zugeordnet. Es ist ersichtlich, dass der Triac 8 aus der Phase als Spannungs-Zeitfläche einen Bereich 30 ausschneidet, aus der Phase S als Spannungs-Zeitfläche einen Bereich 31 und aus der Phase T als Spannungs-Zeitfläche einen Bereich 32. Es ist ferner ersichtlich, dass diese Phasen-Ausschnitte einen unterschiedlichen Anfangspunkt und eine unterschiedliche Breite besitzen. Dies hängt von dem mit diesem Ausführungsbeispiel betriebenen Motor bzw. seinen Kenndaten ab, die unterschiedliche Phasenverschiebungen auslösen können. So hat bei einem gemessenen Beispiel die Phase R gegenüber einem Bezugspunkt eine Verschiebung von 47°, die Phase S eine Verschiebung von 60° und die Phase T eine Verschiebung von 107° gezeigt. Die zugeordneten Wicklungen hatten demnach eine unterschiedliche Stromaufnahme, so dass sich bei richtiger Einstellung der Zeitglieder der Steuerschaltung 6 unterschiedliche Breiten und unterschiedliche Anfangspunkte der Phasenausschnitte ergeben. Bei richtiger Einstellung der Zeitglieder wird so ein ausserordentlich leiser und unter Umständen völlig geräuschloser Lauf des Pumpenmotors erzielt. So entsteht der völlig asymmetrische Phasenausschnitt, der für die vorliegende Erfindung kennzeichnend ist. Eine völlig gleiche Breite der Phasenausschnitte und gleichliegende Anfangspunkte derselben stellen einen Sonderfall dar, der bei den bisher erprobten Motoren nicht eingetreten war.

Fig. 9 zeigt schematisch ein Oszillographenbild, wie es bei der Anwendung auf ein Ausführungsbeispiel nach der Fig. 3 erhalten wurde. Auch hier sind die Phasenausschnitte 33 und 34 der Phasen R und T unterschiedlich breit und besitzen unterschiedliche Anfangspunkte relativ zu den Nulldurchgängen der einzelnen Spannungskurven der drei Phasen R, S und T.

Entsprechende Bilder ergeben sich auch für die Anwendung der Ausführungsbeispiele nach den Fig. 4 und 5, bei denen die Motorwicklungen in Dreieckschaltung angeordnet sind.

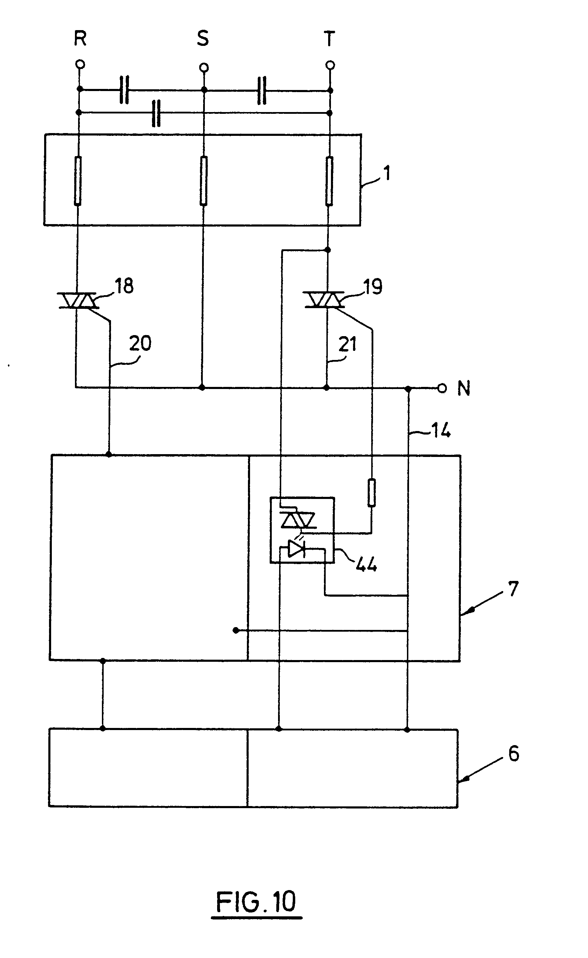

In Fig. 10 ist rein schematisch ein Teil der Gate- und Koppelschaltung 7 für das Ausführungsbeispiel nach Fig. 3 dargestellt. Hierbei werden die den Phasen R und T zugeordneten Triacs 18 und 19 über Leitungen 20 und 21 angesteuert.

Die Koppelschaltung enthält Optokoppler 44, deren Ausgang wiederum mit den Steuerleitungen 21 bzw. 20 der Triacs 19 und 18 verbunden sind. Diese Optokoppler dienen der galvanischen Trennung des Hochspannungs- und Niederspannungsteils der Schaltung.

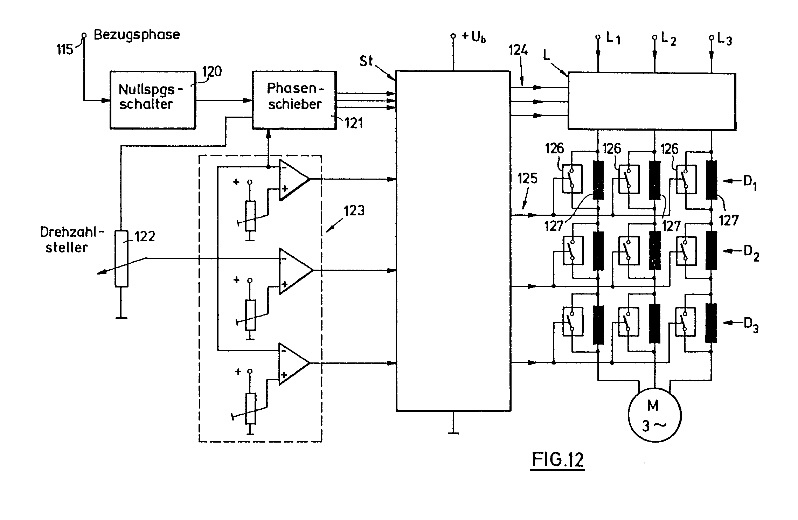

In Fig. 11 ist in ausgezogenen Linien eine Schaltungsanordnung dargestellt, wie sie oben erläutert ist. Hierbei wird vorausgesetzt, dass das die Steuerschaltung ST ansteuernde Signal von einem Druck-Differenzmesser geliefert wird, der parallel zu einer Pumpe in die Pumpenleitung geschaltet ist und dieses Signal an einen Eingang 114 der Schaltungsanordnung legt. Ein Signalwandler SW liefert Ausgangssignale für jede der drei Phasenleitungen RST des Motors M an die Steuerschaltung ST, die ausser einem Mikroprozessor keine Laufzeitglieder enthält und einen Leistungsteil L ansteuert, der an seinem Ausgang Triacs aufweist, die in die Stromzuführung des Motors eingeschaltet sind.

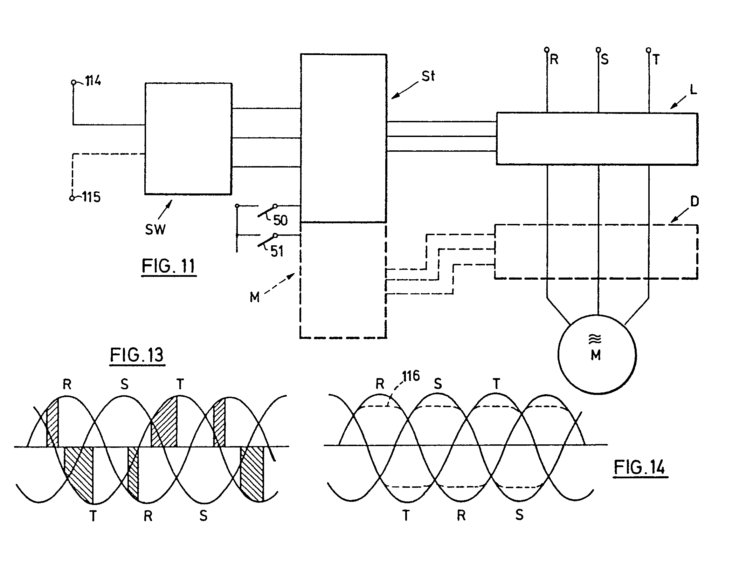

Die Fig. 13 zeigt ein Diagramm des Phasenverlaufs mit asymmetrischer Phasenausschnittsteuerung in den Phasen R und T.

Bei dem in Fig. 12 dargestellten prinzipiellen Schaltungsaufbau sind die von der zuvor beschriebenen Anordnung unterschiedlichen Teile durch unterbrochene Linien dargestellt.

Ein Bezugssignal wird an einen Eingang 115 eines Signalwandlers SW geleitet, dessen Ausgangssignale der Steuerschaltung ST zugeführt werden. Diese enthält einen Mikroprozessor M – z.B. einen 8 bit single chip wie Intel 8048 –, der mindestens eine Drossel-Gruppe D in den Motorzuleitungen RST ein- bzw. ausschaltet. Die in die Stromzuleitungen direkt eingeschalteten Drosseln bewirken eine Herabsetzung der Spannung in den drei Phasen R, S und T etwa in der Weise, wie sie in Fig. 14 in unterbrochenen Linien bei 116 eingezeichnet ist.

Allein diese erfindungsgemässe Massnahme ermöglicht bereits eine bedeutende Herabsetzung des Geräuschpegels der so angesteuerten Motoren.

Nach einer sehr vorteilhaften Ausgestaltung der Erfindung, die im folgenden weiter erläutert ist, ist vorgesehen, beide Massnahmen entsprechend dem Schema nach Fig. 11 gleichzeitig zur Motoransteuerung und Drehzahlregelung zu verwenden. Ein teilweise in Blockschaltung dargestelltes Ausführungsbeispiel ist in Fig. 12 dargestellt, wobei die einzelnen Blöcke an sich bekannte Schaltungen enthalten.

Der Signaleingang 115 entspricht demjenigen nach der vorstehend erläuterten Fig. 11 und speist einen Nullspannungsschalter 120. Dessen Ausgangssignal wird einem Phasenschieber 121 zugeführt, der seinerseits die Signale für die drei Phasenleitungen an die Steuerschaltung ST liefert.

Dem Phasenschieber wird ausserdem ein Signal zugeführt, welches an einem Drehzahlsteller 122 abgegriffen wird, der von Hand oder durch Fremdsteuerung einstellbar ist. Diese Fremdsteuerung kann beispielsweise durch eine Bezugsgrösse gegeben sein, die mit dem Leistungsbedarf des Motors oder mit der Leistungsaufnahme des Motors im Zusammenhang steht.

Ausserdem wird dem Phasenschieber ein Signal aus einer Vergleicherschaltung 123 zugeführt, der ein Spannungspegel entsprechend der Motordrehzahl vorgegeben ist.

Die Steuerschaltung ST steuert in bekannter Weise über eine Leitungsgruppe 124 die gesteuerten Halbleiterelemente in den Motorzuleitungen.

Die Vergleicherschaltung 123 gibt ausserdem Signale an die Steuerschaltung ST, die zusammen mit den oben genannten Signalen einem Mikroprozessor zugeführt werden, dessen Ausgang von einer Leitungsgruppe 125 gebildet ist. In die Stromzuführungen zu dem Motor M ist jeweils ein elektronischer Schalter 126 gelegt. Wenn dieser Schalter geschlossen ist, wird der Motor direkt an die Zuführanschlüsse angeschlossen.

Parallel zu den Schaltern 126 liegt jeweils eine Drossel 127, die bei geöffnetem Schalter 126 direkt in die Stromzuführung zum Motor geschaltet ist. Hier ist zu erwähnen, dass jeweils alle drei Schalter 126 gleichzeitig betätigt, d.h. geschlossen oder geöffnet werden.

In dem dargestellten Ausführungsbeispiel sind drei Drosselgruppen D 1, D 2 und D 3 zusammen mit ihren Ansteuerschaltern hintereinander in die Stromzuführungen zum Motor geschaltet. Das Zuschalten einer Drosselgruppe bewirkt das Absenken der Motorspannung entsprechend dem Beispiel nach Fig. 14, das Zuschalten der zweiten Drosselgruppe bewirkt dann ein weiteres Absenken der dem Motor zugeführten Spannung, und das Zuschalten der dritten Gruppe, d.h. wenn alle drei Drosselgruppen gleichzeitig eingeschaltet sind, bewirkt ein noch weiteres Absenken der Motorspannung.

Zur Erläuterung der Funktionsweise sei auf die beispielsweise und rein schematische Darstellung des Spannungsverlaufes in einer einzelnen der drei Phasen R, S, T verwiesen.

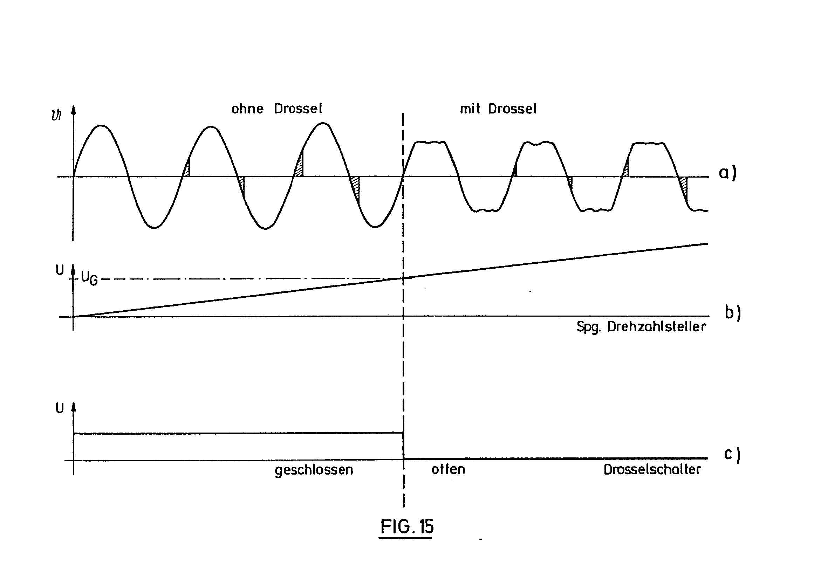

Die Graphik c in Fig. 15 zeigt ein ansteigendes Spannungssignal am Drehzahlsteller 122. Dieses Signal bewirkt in der Steuerschaltung ST einen zunächst zunehmenden Phasenanschnitt, bis eine Grenzspannung $U_G$ erreicht ist. In diesem Augenblick bewirkt die Steuerschaltung ST, dass die gemäss der Graphik c in Fig. 15 zunächst geschlossenen Drosselschalter 126 geöffnet werden, so dass sich die Speisespannung des Motors verringert. Dies bedeutet, dass in den Sinuslinien jeweils die Maxima und Minima abgeschnitten werden.

Da das Spannungssignal vom Drehzahlsteller 126 aber weiter ansteigt, wird nunmehr das Leistungsteil L mit den gesteuerten Halbleiterelementen wieder eingeschaltet, und zwar mit zunehmendem Phasenanschnitt, wie sich aus den schraffierten Flächenbereichen der Graphik a in Fig. 15 ergibt.

Hier ist zu erwähnen, dass die Kombination der beiden Massnahmen, nämlich Phasenanschnitt plus Zuschalten von Drosseln, eine leichte Verflachung der Flanken bei der Phasenanschnittsteuerung ergibt, die sich günstig auf die Dämpfung der Geräuschentwicklung und der Motorerwärmung auswirkt.

Das weiterhin ansteigende Signal vom Drehzahlsteller wird im weiteren, in Fig. 15 nicht mehr dargestellten Verlauf schliesslich dazu führen, dass die zweite Drosselgruppe D 2 zugeschaltet wird, dann die Phasenanschnittsteuerung wieder stärker in die Motorsteuerung eingreift, bis schliesslich auch die dritte Drosselgruppe zugeschaltet werden muss.

Bei Erreichen einer Sollspannung, d.h. bei gleichbleibendem Spannungssignal am Drehzahlsteller, wird die Steuerschaltung versuchen, die eingeschalteten Drosseln wieder abzuschalten und mit dem Phasenanschnitt allein weiterzufahren oder aber den Phasenanschnitt abzuschalten und allein mit der eingeschalteten Drosselgruppe weiterzufahren.

Die Steuerschaltung ST ist mit Schaltern 50, 51 verbunden, über die Einstellsignale eingegeben werden. Der Schalter 50 oder mehrere Schalter sind zur Einstellung einer vorgebbaren Asymmetrie der Phasenanschnittsteuerung vorgesehen. Der Schalter 51 bzw. eine Gruppe von Schaltern wird zur Einstellung des zeitlichen Verlaufs der Drehzahl des Motors M verwendet. Beide Schalter 50, 51 sind vorzugsweise in Form einer Tastatur realisiert, mit der numerische Daten über die Asymmetrie und den zeitlichen Drehzahlverlauf in einen Speicher eingefügt werden, der im Steuerwerk ST vorhanden ist und der als Datenspeicher für den Mikroprozessor eingesetzt wird.

**Patentansprüche**

1. Verfahren zur Steuerung der Drehzahl eines Asynchronmotors zum Antrieb einer Pumpe, insbesondere eines als Spaltrohrläufer oder Käfigläufer ausgebildeten Asynchronmotors, wobei mittels einer vom Leistungsbedarf und/oder von der gewünschten Drehzahl abhängigen Bezugsgrösse in einer Ansteuerschaltung Signale erzeugt werden, die Halbleiterelemente steuern, die in mindestens zwei der die Motorwicklungen speisenden Leitungszüge angeordnet sind, dadurch gekennzeichnet, dass die Spannungs-Zeitflächen an mindestens zwei Motorwicklungen für unterschiedliche Phasen durch den Betrieb der Halbleiterelemente (8, 9, 10; 18, 19; 35; 36) in Phasenanschnittsteuerung derart ungleich eingestellt werden, dass bei gleicher Leistung und Drehzahl, verglichen mit einer Betriebsweise symmetrischen Phasenanschnitts bei allen drei Phasen, sich Pumpengeräusch und Verlustwärme verringern.

2. Verfahren nach Anspruch 1, dadurch gekennzeichnet, dass zur Erzeugung ungleicher Spannungs-Zeitflächen an den Motorwicklungen die Halbleiterelemente in einer asymmetrischen Phasenanschnittsteuerung betrieben werden.

3. Verfahren nach Anspruch 1 oder 2, dadurch gekennzeichnet, dass für mindestens zwei der Phasen zeitlich verzögerte Steuerimpulse erzeugt und den Halbleiterelementen (8, 9, 10; 18, 19; 35; 36) zugeführt werden.

4. Verfahren nach Anspruch 3, dadurch gekennzeichnet, dass die zeitliche Verzögerung der Steuerimpulse für jede der angesteuerten Phasen einstellbar ist.

5. Verfahren nach einem der vorausgehenden Ansprüche, dadurch gekennzeichnet, dass die Impulsbreite der Steuerimpulse einstellbar ist.

6. Verfahren nach Anspruch 1, dadurch gekennzeichnet, dass in der Ansteuerschaltung ein erstes Ausgangssignal erzeugt wird, welches bei einer gewünschten Drehzahländerung, bis die Drehzahl erreicht ist, in jede Stromzuführung zum Asynchronmotor eine Drossel derart einschaltet bzw. ausschaltet, dass bei gleicher Leistung und Drehzahl verglichen mit einer Betriebsweise symmetrischen Phasenanschnitts bei allen drei Phasen, sich Pumpengeräusch und Verlustwärme vermindern.

7. Verfahren nach Anspruch 6 und einem der Ansprüche 1 bis 5, dadurch gekennzeichnet, dass mindestens ein zweites Ausgangssignal erhalten wird, welches den Phasenanschnitt jeder Phase der Stromzuführung so ansteuert, dass eine lastbedingte Drehzahländerung aufgehoben wird.

8. Verfahren nach Anspruch 7, dadurch gekennzeichnet, dass die Steuerschaltung eines der beiden oder beide Ausgangssignale bei Erreichen einer vorgegebenen Drehzahl bzw. einer bestimmten Leistungsaufnahme abschaltet.

9. Verfahren nach Anspruch 6 oder einem der Ansprüche 7 und 8, dadurch gekennzeichnet, dass das Eingangssignal der Steuerschaltung aus einer Vergleicherschaltung erhalten wird, der ein Spannungspegel entsprechend der Motordrehzahl vorgegeben wird und die einen Phasenschieber ansteuert, der das Eingangssignal der Steuerschaltung für drei Phasen erzeugt.

10. Vorrichtung zum Steuern der Drehzahl eines Asynchronmotors zum Antrieb einer Pumpe, insbesondere eines als Spaltrohrläufer oder Käfigläufer ausgebildeten Asynchronmotors, wobei mittels einer vom Leistungsbedarf der Pumpe und/oder von einer gewünschten Drehzahl abgeleiteten Bezugsgrösse in einer Ansteuerschaltung Signale erzeugt werden, die Halbleiterelemente steuern, die in mindestens zwei der die Motorwicklungen speisenden Leitungszüge angeordnet sind, dadurch gekennzeichnet, dass die Ansteuerschaltung für mindestens zwei der Halbleiterelemente (8, 9, 10; 18, 19; 35; 36) Schaltkreise (6) mit Zeitgliedern (25, 26, 27) enthält, die derart ungleich eingestellt sind, dass bei gleicher Leistung und Drehzahl, verglichen mit einer Betriebsweise symmetrischen Phasenanschnitts bei allen drei Phasen, sich Pumpengeräusch und Verlustwärme verringern.

11. Vorrichtung nach Anspruch 10, dadurch gekennzeichnet, dass einstellbare Zeitglieder (25, 27) vorgesehen sind.

12. Vorrichtung nach Anspruch 10 oder 11, dadurch gekennzeichnet, dass lediglich die Hauptwicklungen des Motors (1) angesteuert sind.

13. Vorrichtung nach einem der Ansprüche 10 bis 12, dadurch gekennzeichnet, dass die Wicklungen des Asynchronmotors (1) in Sternschaltung geschaltet sind und die gesteuerten Halbleiterelemente (8, 9, 10; 18, 19) zwischen Sternpunkt und Wicklung angeordnet sind.

14. Vorrichtung nach einem der Ansprüche 10 bis 13, dadurch gekennzeichnet, dass die Wicklungen des Asynchronmotors (1) in Dreieckschaltung geschaltet sind und die gesteuerten Halbleiterelemente (35; 36) zwischen Netzanschluss und Wicklung angeordnet sind.

15. Vorrichtung nach einem der Ansprüche 10 bis 14, dadurch gekennzeichnet, dass als Quelle für die Bezugsgrösse ein an die Pumpenleitung (3) parallel zur Pumpe angeschlossenen Differenzdruckmesser (4) mit einem von diesem gesteuerten Schaltkreis (5) zur Erzeugung des Bezugsignals vorgesehen ist.

16. Vorrichtung nach Anspruch 10 bis 15 zur Durchführung des Verfahrens nach einem der Ansprüche 6 bis 9, dadurch gekennzeichnet, dass in die Speiseleitungen (R, S, T) zum Asynchronmotor mindestens je eine zu- und abschaltbare Drossel (127) geschaltet ist und dass die Ansteuerschaltung (ST) für die Halbleiterelemente der asymmetrischen Phasenanschnittsteuerung von einem Mikroprozessor gebildet ist, der zugleich das Zu- bzw. Abschalten der Drosseln (127) für die Dauer mindestens einer Phasendrehung steuert.

17. Vorrichtung nach Anspruch 16, dadurch gekennzeichnet, dass die dem Mikroprozessor vorgeschaltete Regelschaltung einen Eingang (114) für ein der Motorlast proportionales Signal aufweist.

18. Vorrichtung nach Anspruch 16, dadurch gekennzeichnet, dass die dem Mikroprozessor vorgeschaltete Regelschaltung (R) eine Phasenschieberschaltung (121) enthält, die von einem Drehzahlgeber und einer Triggerschaltung und einer Vergleichergruppe angesteuert ist.

19. Vorrichtung nach einem der Ansprüche 16 bis 18, dadurch gekennzeichnet, dass die Drosseln (127) zwischen die Halbleiterelemente zur Phasenanschnittsteuerung und den Motor in dessen Zuleitungen eingeschaltet sind.

20. Vorrichtung nach Anspruch 10 oder einem der folgenden Ansprüche, dadurch gekennzeichnet, dass die Halbleiterelemente (8, 9, 10; 18, 19; 35; 36) der Phasenanschnittsteuerung als Triacs ausgebildet sind.

21. Vorrichtung nach Anspruch 10 oder einem der folgenden Ansprüche, dadurch gekennzeichnet, dass vorgegebene asymmetrische Phasenanschnittwerte mittels Schaltern (50) einstellbar sind.

22. Vorrichtung nach Anspruch 16 oder einem der folgenden Ansprüche, dadurch gekennzeichnet, dass mittels Schaltern (51) der zeitabhängige Verlauf der Drehzahlen einstellbar ist.

**Claims**

1. A method of controlling the speed of an induction motor for driving a pump, especially a split-cage motor or squirrel-cage motor, whereby a reference value dependent on the power demand and/or the required speed produces signals in a drive circuit which trigger semiconductor devices placed in at least two of the feeder circuits to the motor windings; characterized by the voltage-time areas of at least two motor windings for different phases being made unequal by operation of the semiconductor devices (8, 9, 10; 18, 19; 35; 36) in phase control so that, for the same power and speed compared with operation with symmetrical phase angles in all three phases, pump noise and heat loss are reduced.

2. A method as claimed in claim 1, characterized by the semiconductor devices being operated in asymmetrical phase control in order to produce unequal voltage-time areas for the motor windings.

3. A method as claimed in claim 1 or 2, characterized by delayed trigger pulses being generated for at least two of the phases and being fed to the semiconductor devices (8, 9, 10; 18, 19; 35; 36).

4. A method as claimed in claim 3, characterized by the time delay of the trigger pulses for each of the controlled phases being adjustable.

5. A method as claimed in one of the foregoing claims, characterized by the pulse duration of the trigger pulses being adjustable.

6. A method as claimed in claim 1, characterized by an initial output signal being produced in the drive circuit which, when there is a required change in speed, and until that speed is reached, switches a reactor in each power feeder to the induction motor on and off so that, for the same power and speed compared with operation with symmetrical phase angles in all three phases, pump noise and heat loss are reduced.

7. A method as claimed in claim 6 and one of claims 1 to 5, characterized by at least a second output signal being obtained which controls the phase angle of each phase of the power feed so that there is no load-sensitive change in speed.

8. A method as claimed in claim 7, characterized by the drive circuit inhibiting either or both of the output signals when a preset speed or power consumption is reached.

9. A method as claimed in claim 6 or either of claims 7 or 8, characterized by the input signal for the drive circuit being obtained from a comparator circuit which is supplied with a voltage level corresponding to the motor speed and triggers a phase shifter which produces the input signal of the drive circuit for three phases.

10. A means of controlling the speed of an induction motor for driving a pump, especially a split-cage motor or a squirrel-cage motor, whereby a reference value dependent on the power demand of the pump and/or the required speed produces signals in a drive circuit which triggers semiconductor devices placed in at least two of the feeder circuits to the motor windings, characterized by the drive circuit for at least two of the semiconductor devices (8, 9, 10; 18, 19; 35; 36) containing switching circuits (6) with timing elements (25, 26, 27) which are set unequally so that, for the same power and speed compared with operation with symmetrical phase angles in all three phases, pump noise and heat loss are reduced.

11. A means as claimed in claim 10, characterized by adjustable timing elements (25, 27) being provided.

12. A means as claimed in claim 10 or 11, characterized by only the main windings of the motor (1) being controlled.

13. A means as claimed in one of claims 10 to 12, characterized by the windings of the induction motor (1) being wye-connected and the controlled semiconductor devices (8, 9, 10; 18, 19) being placed between neutral point and winding.

14. A means as claimed in one of claims 10 to 13, characterized by the windings of the induction motor (1) being delta-connected and the controlled semiconductor devices (35; 36) being placed between line terminals and winding.

15. A means as claimed in one of claims 10 to 14, characterized by the reference value signal being generated by a switching circuit (5) driven by a differential-pressure instrument (4) connected to the pump line (3) parallel to the pump.

16. A means as claimed in claims 10 to 15 for executing the method as claimed in one of claims 6 to 9, characterized by each of the feeders (R, S, T) to the induction motor containing at least one switchable reactor (127) and the drive circuit (ST) for the semiconductor devices of the asymmetrical phase control comprising a microprocessor which also controls the on/off switching of the reactors (127) for at least one phase rotation.

17. A means as claimed in claim 16, characterized by the control circuit preceding the microprocessor having an input (114) for a signal proportional to the motor load.

18. A means as claimed in claim 16, characterized by the control circuit (R) preceding the microprocessor incorporating a phase-shift circuit (121) driven by a speed transmitter and a trigger circuit and a comparator module.

19. A means as claimed in one of claims 16 to 18, characterized by the reactors (127) being connected between the semiconductors for phase control and the motor in its feeders.

20. A means as claimed in claim 10 or one of the subsequent claims, characterized by the semiconductor devices (8, 9, 10; 18, 19; 35; 36) for phase control being triacs.

21. A means as claimed in claim 10 or one of the subsequent claims, characterized by the issued values of asymmetrical phase angle being adjustable with switches (50).

22. A means as claimed in claim 16 or one of the subsequent claims, characterized by the variation in speed with respect to time being adjustable with switches (51).

**Revendications**

1. Procédé pour le réglage de la vitesse d'un moteur asynchrone actionnant une pompe, en particulier d'un moteur asynchrone développé en moteur à gaine ou à rotor à cage, dans lequel, à l'aide d'une grandeur de référence, déterminée en fonction de la puissance requise et/ou de la vitesse désirée, des signaux sont créés dans un circuit sélecteur qui commandent des éléments semi-conducteurs incorporés dans deux ou trois conducteurs d'alimentation, au moins, caractérisé par le fait que, dans le cadre d'un réglage de phase, les surfaces tension-temps sur deux enroulements du moteur, au moins, dont le réglage est fait par l'intervention des éléments semi-conducteurs (8, 9, 10; 18, 19; 35; 36) avec une telle différence que, par rapport à un mode de réalisation symétrique, et à égalité de puissance et de vitesse, le bruit causé par les pompes et la perte de chaleur sont réduits pour les trois phases.

2. Procédé d'après la revendication 1, caractérisé par le fait que pour la génération de surfaces tension-temps inégales sur les enroulements du moteur, les éléments semi-conducteurs sont mis en fonctionnement dans le cadre d'un réglage de phase asymétrique.

3. Procédé d'après la revendication 1 ou 2, caractérisé par le fait qu'au moins pour deux des phases, des impulsions de commande temporisées sont générées et amenées aux éléments semi-conducteurs (8, 9, 10; 18, 19; 35; 36).

4. Procédé d'après la revendication 3, caractérisé par le fait que le temps de retardement des impulsions de commande est réglable pour chacune des phases sélectionnées.

5. Procédé d'après une des revendications précédentes, caractérisé par le fait que la largeur des impulsions de commande est réglable.

6. Procédé d'après la revendication 1, caractérisé par le fait que lors de l'initiation d'un changement de vitesse, un premier signal de sortie est créé dans le circuit sélecteur par lequel, jusqu'au moment où la vitesse désirée est atteinte, un self est mis sous ou hors tension dans chacune des amenées de courant du moteur asynchrone, de telle manière que, par rapport à un mode de fonctionnement symétrique du réglage de phase, le bruit causé par les pompes et la perte de chaleur sont réduits dans toutes les trois phases.

7. Procédé d'après la revendication 6 et une des revendications de 1 à 5, caractérisé par le fait qu'au moins un deuxième signal de sortie est perçu qui commande le réglage de chacune des phases de l'alimentation en courant de telle façon que tout changement de vitesse, provoqué par la charge, est compensé.

8. Procédé d'après la revendication 7, caractérisé par le fait que le circuit de commande déconnecte un des deux signaux de sortie, ou les deux signaux de sortie, dès que la vitesse préfixée est atteinte, ou une puissance déterminée absorbée.

9. Procédé d'après la revendication 6 ou une des revendications 7 et 8, caractérisé par le fait que le signal d'entrée du circuit de commande est fourni par un circuit comparateur dont le niveau de tension est préfixé en fonction de la vitesse du moteur, et qu'un déphaseur, commandé par le circuit comparateur, crée le signal d'entrée du circuit de commande pour trois phases.

10. Dispositif pour le réglage de la vitesse d'un moteur asynchrone pour actionner une pompe, en particulier d'un moteur asynchrone développé en moteur à gaine ou à rotor à cage, où, à l'aide d'une grandeur de référence, déterminée en fonction de la puissance requise et/ou de la vitesse désirée, des signaux sont créés dans un circuit sélecteur qui commandent des éléments semi-conducteurs incorporés dans deux ou trois conducteurs d'alimentation, au moins, caractérisé par le fait que le circuit sélecteur comprend des circuits de commutation (6) comportant des systèmes de temporisation (25, 26, 27) au moins pour deux éléments semi-conducteurs (8, 9, 10; 18, 19; 35; 36), dont le réglage est fait avec une telle différence que, par rapport à un mode de réalisation à réglage de phase symétrique, à égalité de puissance et de vitesse, le bruit causé par les pompes et la perte de chaleur sont réduits pour toutes les trois phases.

11. Dispositif d'après la revendication 10, caractérisé par le fait que des systèmes de temporisation (25, 27) sont prévus.

12. Dispositif d'après la revendication 10 ou 11, caractérisé par le fait que seulement les enroulements principaux du moteur (1) sont commandés.

13. Dispositif d'après une des revendications de 10 à 12, caractérisé par le fait que les enroulements du moteur asynchrone (1) sont couplés en étoile, et que les éléments semi-conducteurs commandés (8, 9, 10; 18, 19) sont disposés entre le point neutre et l'enroulement.

14. Dispositif d'après une des revendications de 10 à 13, caractérisé par le fait que les enroulements du moteur asynchrone (1) sont couplés en triangle, et que les éléments semi-conducteurs commandés (35; 36) sont disposés entre le raccordement au réseau et l'enroulement.

15. Dispositif d'après une des revendications de 10 à 14, caractérisé par le fait que la source de la grandeur de référence est un manomètre différentiel (4), raccordé à la ligne de la pompe (3), comportant un circuit de commutation (5), commandé par celui-ci, pour la création du signal de référence.

16. Dispositif d'après les revendications de 10 à 15 pour la réalisation du procédé d'après une des revendications de 6 à 9, caractérisé par le fait que sur chacun des conducteurs d'alimentation (R, S, T) vers le moteur asynchrone, au moins un self (127) est raccordé pouvant être mis en et hors tension, et que le circuit sélecteur (ST) pour les éléments semi-conducteurs du réglage asymétrique de phase est constitué par un microprocesseur qui commande simultanément la mise en ou hors tension des selfs (127), au moins pour la durée d'une rotation de phase.

17. Dispositif d'après la revendication 16, caractérisé par le fait que le circuit de régulation, monté en amont du microprocesseur, comporte une entrée (114) pour un signal proportionnel à la charge du moteur.

18. Dispositif d'après la revendication 16, caractérisé par le fait que le circuit de régulation (R), monté en amont du microprocesseur, comprend un circuit déphaseur (121), commandé par un transmetteur de vitesse, un circuit de déclenchement et un groupe de comparaison.

19. Dispositif d'après une des revendications de 16 à 18, caractérisé par le fait que les selfs, situés entre les éléments semi-conducteurs vers le réglage de phase et le moteur, sont intercalés dans les conducteurs d'amenée du moteur.

20. Dispositif d'après la revendication 10 ou une des revendications suivantes, caractérisé par le fait que les éléments semi-conducteurs (8, 9, 10; 18, 19; 35; 36) du réglage de phase sont développés en triacs.

21. Dispositif d'après la revendication 10 ou une des revendications suivantes, caractérisé par le fait que les grandeurs asymétriques du réglage de phase préfixées peuvent être réglées à l'aide de commutateurs (50).

22. Dispositif d'après la revendication 16 ou une des revendications suivantes, caractérisé par le fait que l'allure des vitesses, asservie au temps, peut être réglée à l'aide de commutateurs (51).

FIG.1

FIG. 2

FIG. 3

R  S  T

1

8  11  12  10  9  13  14

Gate und Koppelschaltung  7

15  16  17  14

Steuerschaltung mit Timer  6

Regel-spanner  5

4  3  2

R  S  T

1

18  19  21

20  14

7

15  17  14

6

5  4  2

0113735

FIG.5

FIG.4

0 113 735

## FIG.7

A Takt (24)
B TIMER 25
C AUSGANG 16
D TRIMMER 26
E TIMER 27
F AUSGANG 17

t ⟶

6

24

25 — 5-7 msec | Ausgangs-impuls — 28

R 15

S 16

ca. 6 msec fest | 5-7 msec | Ausgangs-impuls

T 17

26      27      29

## FIG.6

FIG.8

FIG.9

FIG. 10

Bezugsphase

115

Nullspgs-schalter 120

Phasen-schieber 121

St

+U_b

124 L

L_1 L_2 L_3

Drehzahl-steller

122

123

125

126 126 126

$\leftarrow$ D_1

127 127 127

$\leftarrow$ D_2

$\leftarrow$ D_3

M 3$\sim$

FIG.12

0 113 735

FIG. 11

FIG.13

FIG.14

ohne Drossel · mit Drossel

a)

$U_G$

Spg. Drehzahlsteller

b)

geschlossen · offen · Drosselschalter

c)

FIG. 15